# EUROPEAN PATENT APPLICATION

(11) **EP 4 633 088 A1**
(43) Date of publication of application: **15.10.2025**
(21) Application number: 25169152.3
(22) Date of filing: 08.04.2025
(51) Int. Cl.: H04L 9/40, G06F 21/31

(54) **A SERVICE REQUEST PROCESSING METHOD AND APPARATUS, AN ELECTRONIC DEVICE, AND A STORAGE MEDIUM**

(30) Priority: 08.04.2024 CN 202410418257
(71) Applicant: BEIJING YOUZHUJU NETWORK TECHNOLOGY CO. LTD., Beijing 101299 (CN)
(72) Inventor: JIA, Li, Beijing, 100028 (CN)
(74) Representative: Isarpatent

(57) **Abstract**

The present disclosure provides a service request processing method and apparatus, a device, and a storage medium. The method includes: (101) receiving a target service request for a target service sent by a client; (102) determining a candidate verification manner set corresponding to the target service request; (103) determining a target verification manner from the candidate verification manner set based on a first client feature of the client and/or a feature of a service corresponding to the target service; and (104) verifying the client based on the target verification manner, and determining a response manner corresponding to the target service request based on a verification result.

## Description

### CROSS-REFERENCE TO RELATED APPLICATION

This application claims the priority to and benefits of the Chinese Patent Application, No. 202410418257.2, which was filed on April 8, 2024. The aforementioned patent application is hereby incorporated by reference in its entirety.

### TECHNICAL FIELD

Embodiments of the present disclosure relate to the field of computer technologies and, in particular, to a service request processing method and apparatus, a device, and a storage medium.

### BACKGROUND

With the wide application of computer technologies and Internet technologies, users are provided with more and more services, and the number of users is also constantly increasing. However, some of the users who obtain a service may be malicious users, which not only wastes service resources and causes losses to a service provider, but also has a certain impact on ordinary users.

In order to avoid the negative impact caused by responding to a service request from a malicious user, a preset verification manner is usually used to verify a client that transmits the service request. Commonly used verification manners include SMS verification, image selection verification, and the like.

However, existing solutions for performing verification based on a preset verification manner still have some problems and need to be improved.

### SUMMARY

Embodiments of the present disclosure provide a service request processing method and apparatus, a device, and a storage medium, which can optimize an existing service request processing solution.

According to a first aspect, an embodiment of the present disclosure provides a service request processing method, including:
receiving a target service request for a target service sent by a client;
determining a candidate verification manner set corresponding to the target service request;
determining a target verification manner from the candidate verification manner set based on a first client feature of the client and/or a feature of a service corresponding to the target service; and
verifying the client based on the target verification manner, and determining a response manner corresponding to the target service request based on a verification result.

According to a second aspect, an embodiment of the present disclosure further provides a service request processing apparatus, including:
a service request receiving module configured to receive a target service request for a target service sent by a client;
a candidate set determination module configured to determine a candidate verification manner set corresponding to the target service request;
a target manner determination module configured to determine a target verification manner from the candidate verification manner set based on a first client feature of the client and/or a feature of a service corresponding to the target service; and
a service response module configured to verify the client based on the target verification manner, and determine a response manner corresponding to the target service request based on a verification result.

According to a third aspect, an embodiment of the present disclosure further provides an electronic device, including:
one or more processors; and
a storage apparatus configured to store one or more programs,
wherein the one or more programs, when executed by the one or more processors, cause the one or more processors to perform the service request processing method provided in the embodiments of the present disclosure.

According to a fourth aspect, an embodiment of the present disclosure further provides a storage medium including computer-executable instructions, wherein the computer-executable instructions, when executed by a computer processor, cause the service request processing method provided in the embodiments of the present disclosure to be performed.

### BRIEF DESCRIPTION OF DRAWINGS

The foregoing and other features, advantages, and aspects of the embodiments of the present disclosure become more apparent with reference to the following specific implementations and in conjunction with the drawings. Throughout the drawings, the same or similar reference numbers refer to the same or similar elements. It should be understood that the drawings are schematic and that the originals and elements are not necessarily drawn to scale.
Fig. 1 is a flowchart of a service request processing method according to an embodiment of the present disclosure;
Fig. 2 is a flowchart of another service request processing method according to an embodiment of the present disclosure;
Fig. 3 is a flowchart of still another service request processing method according to an embodiment of the present disclosure;
Fig. 4 is a flowchart of a process of determining a target verification manner according to an embodiment of the present disclosure;
Fig. 5 is a diagram illustrating the structure of a service request processing apparatus according to an embodiment of the present disclosure; and
Fig. 6 is a diagram illustrating the structure of an electronic device according to an embodiment of the present disclosure.

### DETAILED DESCRIPTION

Embodiments of the present disclosure are described in more detail below with reference to the drawings. Although some embodiments of the present disclosure are shown in the drawings, it should be understood that the present disclosure may be implemented in various forms and should not be construed as being limited to the embodiments set forth herein. Rather, these embodiments are provided for a thorough and complete understanding of the present disclosure. It should be understood that the drawings and the embodiments of the present disclosure are only for exemplary purposes and are not intended to limit the protection scope of the present disclosure.

It should be understood that the various steps described in the method implementations of the present disclosure may be performed in different orders and/or in parallel. Furthermore, additional steps may be included and/or execution of the illustrated steps may be omitted in the method implementations. The scope of the present disclosure is not limited in this respect.

The term "include/comprise" used herein and variations thereof are open-ended inclusions, that is, "include/comprise but not limited to". The term "based on" is "at least partially based on". The term "an embodiment" means "at least one embodiment"; the term "another embodiment" means "at least one other embodiment"; and the term "some embodiments" means "at least some embodiments". Related definitions of other terms are given in the following description.

It should be noted that the concepts such as "first" and "second" mentioned in the present disclosure are only used to distinguish between different apparatuses, modules, or units and are not used to limit the sequence of functions performed by these apparatuses, modules, or units or their interdependence.

It should be noted that the modifiers "one" and "a plurality of" mentioned in the present disclosure are illustrative rather than restrictive, and those skilled in the art should understand that unless the context clearly indicates otherwise, they should be understood as "one or more".

The names of messages or information exchanged between apparatuses in the implementations of the present disclosure are only for illustrative purposes and are not intended to limit the scope of the messages or information.

It can be understood that before using the technical solutions disclosed in the embodiments of the present disclosure, users should be informed of the types of personal information involved in the present disclosure, the scope of use, the usage scenarios, and the like through appropriate methods in accordance with relevant laws and regulations, and the users should be obtained authorization.

For example, when an active request from a user is received, prompt information is sent to the user to clearly prompt the user that an operation requested by the user to be performed will require the acquisition and use of the user's personal information. Therefore, the user can independently choose, based on the prompt information, whether to provide the personal information to software or hardware, such as an electronic device, an application, a server, or a storage medium, that performs the operation of the technical solution of the present disclosure.

As an optional but non-limiting implementation, the manner of transmitting the prompt information to the user in response to the receipt of the user's active request may be, for example, a pop-up window, and the prompt information may be presented in the pop-up window in the form of text. In addition, the pop-up window may further carry a selection control for the user to choose whether to "agree" or "disagree" to provide the personal information to the electronic device.

It can be understood that the preceding process of notifying and obtaining user authorization is only illustrative and does not limit the implementations of the present disclosure. Other manners that meet relevant laws and regulations may also be applied to the implementations of the present disclosure.

It can be understood that the data involved in the technical solution (including but not limited to the data itself, the acquisition of the data, or the use of the data) should comply with the requirements of relevant laws, regulations, and provisions.

In order to facilitate understanding of the technical solutions in the embodiments of the present disclosure, the related art is described below. At present, a service provider (hereinafter referred to as a service) can provide various services to a user through an Internet platform, and the user can directly or indirectly obtain a corresponding service by transmitting a service request in a process of browsing network information through a client corresponding to the Internet platform. However, some of the users who obtain a service may be malicious users, and the malicious users may use robots or other means to automatically submit or frequently submit service requests for their own benefit to achieve their purposes, which not only wastes service resources and causes losses to the service, but also has a certain impact on ordinary users. In order to avoid the negative impact caused by responding to a service request from a malicious user, the malicious user needs to be accurately identified. In the related art, a preset verification manner is used to verify a client that transmits the service request. Commonly used verification manners include SMS verification and image selection verification. If the verification fails, the current service request may be submitted by a malicious user, and a response may be refused. However, it is difficult to obtain a good verification effect by using a fixed verification manner. For example, if the verification manner is very difficult for the current ordinary user, the current ordinary user may also fail to pass the verification, resulting in false identification. For another example, if the verification manner is complex for the current ordinary user to operate, the current ordinary user may also give up the verification, resulting in the loss of a potential customer. However, an excessively simple verification manner may be successfully verified automatically by using related software and hardware means adopted by malicious users. Therefore, it is difficult to obtain a good verification effect by using an indiscriminately solidified verification manner for verification.

In the embodiments of the present disclosure, when a client that transmits a service request needs to be verified, a verification manner that needs to be currently used may be dynamically determined based on a client feature and/or a feature of a service corresponding to the service request, thereby improving the flexibility, accuracy, and verification efficiency of client verification.

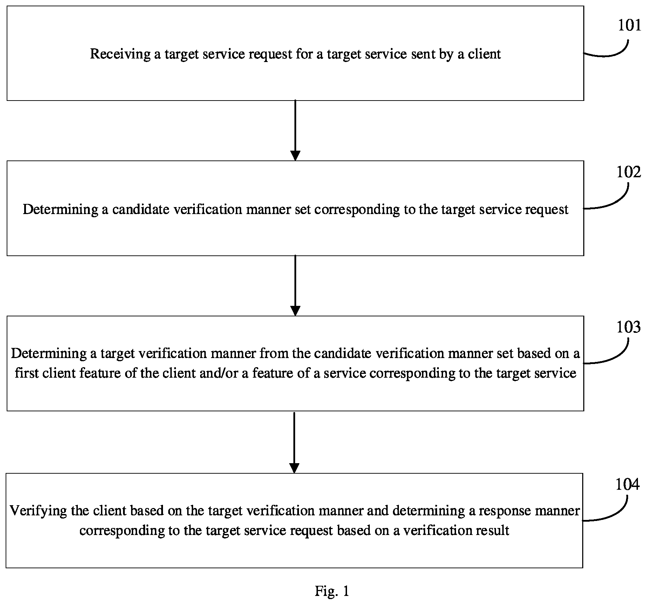

Fig. 1 is a flowchart of a service request processing method according to an embodiment of the present disclosure. The embodiment of the present disclosure is applicable to a scenario in which a client that initiates a service request is verified when the service request is responded to. The method may be performed by a service request processing apparatus, which may be implemented in the form of software and/or hardware, optionally, by an electronic device, and the electronic device may be a device such as a personal computer (PC) or a server, or the like.

As shown in Fig. 1, the method includes the steps below.

Step 101: Receiving a target service request for a target service sent by a client.

The client in this embodiment of the present disclosure may be an application or a webpage running on a terminal device. A server corresponding to the client may be an Internet platform. The terminal device may be a mobile terminal such as a mobile phone, a smart watch, a tablet computer, and a personal digital assistant, or may be a terminal such as a PC. The electronic device may be configured as the server.

Exemplarily, the target service may be any service provided by a service through the Internet platform, and a specific type of the target service is not limited, such as an information browsing service, an information acquisition service, an account registration service, an account login service, an information entry service, and a resource acquisition service. When it is detected that a user wants to obtain the target service through the client, a service request for the target service (denoted as a target service request) may be transmitted to the server through the client, and the server receives the target service request.

Step 102: Determining a candidate verification manner set corresponding to the target service request.

Exemplarily, a server may preset a verification manner library (denoted as a preset verification manner library), and the preset verification manner library includes multiple preset verification manners. The preset verification manners may be used to verify the authenticity of a client or a user that transmits a service request. The preset verification manners may include, for example, SMS verification, email verification, image selection verification, slider verification, Chinese idiom fill-in-the-blank verification, question answering verification, telephone voice verification, and instant messaging software message verification. The candidate verification manner set may include all or part of the preset verification manners in the preset verification manner library.

Exemplarily, the candidate verification manner set may include some preset verification manners in the preset verification manner library. Optionally, a first mapping relationship between different services and the preset verification manners may be preset. After the target service request is received, the preset verification manner corresponding to the target service is obtained from the preset verification manner library based on the first mapping relationship to obtain the candidate verification manner set corresponding to the target service request. Optionally, various service scenarios may be preset, and a second mapping relationship between different service scenarios and the preset verification manners may be preset. After the target service request is received, the preset verification manner corresponding to the service scenario corresponding to the target service request is obtained from the preset verification manner library based on the second mapping relationship to obtain the candidate verification manner set corresponding to the target service request, that is, the corresponding candidate verification manner set is determined from the preset verification manner library based on the service scenario corresponding to the target service request. Therefore, the selection range of the target verification manner may be more flexibly determined, and the efficiency and accuracy of determining the target verification manner can be improved. The basis for dividing the service scenarios may be set according to actual requirements, and may include, for example, a service time, a service location, a time when the service request is received, a region where the client that transmits the service request is located, a page displayed by the client when the service request is sent, and a trigger mode of the service request.

Step 103: Determining a target verification manner from the candidate verification manner set based on a first client feature of the client and/or a feature of a service corresponding to the target service.

Exemplarily, the first client feature of the client may include a device feature of a device in which the client is located, that is, a device feature of a terminal device running the client, which is denoted as a first device feature. A specific content of the first device feature is not limited, and may include, for example, a device model, a device operating system, a device identification number (such as a device id), and a device address, where the device address is, for example, an Internet Protocol (IP) address. The first client feature of the client may further include a network feature corresponding to the client, which is denoted as a first network feature. A specific content of the first network feature is not limited, and may include, for example, a network type and a network operator type. The first client feature of the client may further include an account feature corresponding to the client, which is denoted as a first account feature. A specific content of the first account feature is not limited, and may include, for example, a registration time, user registration information, an online duration, a historical operation, and historical statistical data. The historical statistical data may include, for example, a pass rate for various verification manners.

Exemplarily, the feature of the service corresponding to the target service may be understood as a feature of a target service, and the target service is a service that provides the target service. A specific content of the feature of the service is not limited, and may include, for example, an industry to which the target service belongs, a providing manner of the target service, a region where the target service is located, a providing cost of the target service, and preference information of the target service for a verification manner. The preference information for the verification manner may be predicted by using a preset evaluation method and may also be determined according to the configuration of the target service.

Exemplarily, a preset verification manner selection method may be used to determine the target verification manner from the candidate verification manner set based on the first client feature and/or the feature of the service. The preset verification manner selection method may be implemented based on a Rulebase or a machine learning model. For example, the machine learning model may be a large language model (LLM). For example, the preset verification manner selection method may be querying a preset mapping relationship between a client feature and/or a service feature and the target verification manner based on the first client feature and/or the feature of the service corresponding to the target service (where the preset mapping relationship may be a one-to-one, many-to-one, or one-to-many relationship and is not specifically limited), and then determining the current target verification manner.

Step 104: Verifying the client based on the target verification manner and determining a response manner corresponding to the target service request based on a verification result.

Exemplarily, after the target verification manner is determined, the client is verified based on the target verification manner. For example, information to be verified corresponding to the target verification manner is returned to the client, so that the client renders and displays a verification page corresponding to the target verification manner based on the information to be verified and receives a verification operation input by a current user based on the verification page, to verify whether the current user is a real user. For example, when the target verification manner is an image selection verification manner, related images and the like may be returned to the client as the information to be verified. The client displays an image verification page, and the current user selects words in a prompted image, and judges whether the words selected by the user are the prompted words. If yes, the verification is passed; if not, the verification is failed.

Exemplarily, if the verification result is passed, corresponding service information may be returned to the client; if the verification result is failed, verification failure information may be returned to the client.

The service request processing method in the embodiments of the present disclosure includes: receiving a target service request for a target service sent by a client; determining a candidate verification manner set corresponding to the target service request; determining a target verification manner from the candidate verification manner set based on a first client feature of the client and/or a feature of a service corresponding to the target service; and verifying the client based on the target verification manner, and determining a response manner corresponding to the target service request based on a verification result. By using the preceding technical solution, when a client that transmits a service request needs to be verified, a verification manner that needs to be currently used may be dynamically determined based on a client feature and/or a feature of a service corresponding to the service request, thereby improving the flexibility, accuracy, and verification efficiency of client verification.

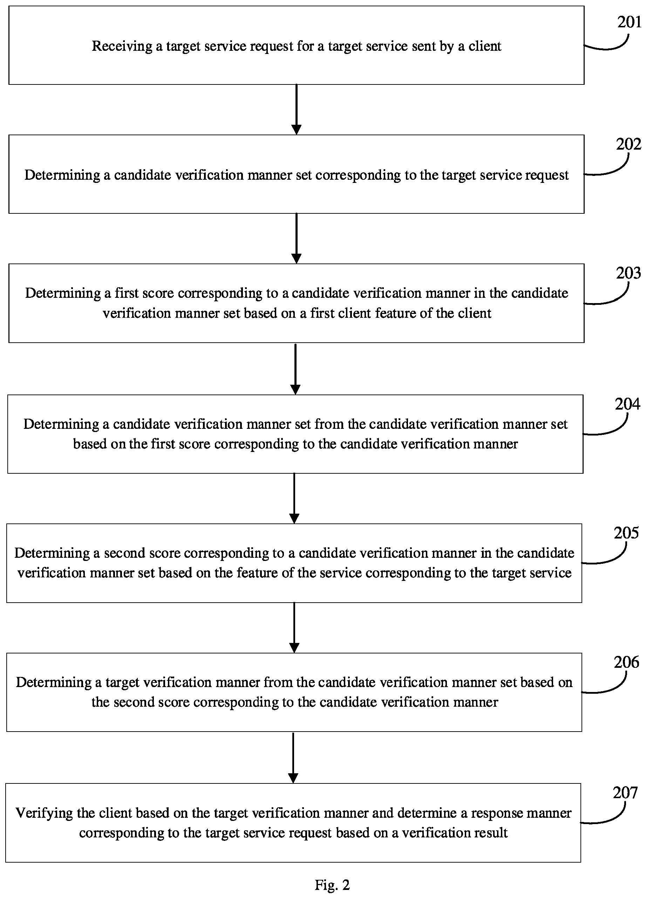

Fig. 2 is a flowchart of another service request processing method according to an embodiment of the present disclosure. The embodiment of the present disclosure optimizes the preceding embodiment based on various optional solutions in the preceding embodiment and provides a preferred implementation of determining the target verification manner from the candidate verification manner set based on the first client feature of the client and the feature of the service corresponding to the target service. The candidate verification manner set is determined based on the first client feature, and then the target verification manner is determined from the candidate verification manner set based on the feature of the service corresponding to the target service, thereby improving the efficiency and accuracy of determining the target verification manner. Specifically, the method includes the steps below.

Step 201: Receiving a target service request for a target service sent by a client.

Step 202: Determining a candidate verification manner set corresponding to the target service request.

Optionally, the corresponding candidate verification manner set is determined from the preset verification manner library based on the service scenario corresponding to the target service request.

Step 203: Determining a first score corresponding to a candidate verification manner in the candidate verification manner set based on a first client feature of the client.

Exemplarily, for each candidate verification manner in the candidate verification manner set, the first score corresponding to the current candidate verification manner is determined based on the first client feature of the client. A specific scoring manner is not limited. For example, first preset scores corresponding to each verification manner may be preset for different feature values of feature indicators included in the first client feature. For the current candidate verification manner, the first score corresponding to the current candidate verification manner is determined based on a sum, a weighted sum, or a product of the first preset scores corresponding to the feature values of the feature indicators included in the first client feature. For another example, for each combination of different feature values of the feature indicators included in the first client feature, a first correspondence between the combination and first scores corresponding to each verification manner is established in advance. For the current candidate verification manner, a corresponding first target combination is determined based on the first client feature of the client, and the first score corresponding to the first target combination is determined by querying the first correspondence to obtain the first score corresponding to the current candidate verification manner.

Optionally, the first score is related to a verification cost of the corresponding candidate verification manner, and the verification cost is used to characterize the difficulty of the client passing verification performed by using the corresponding candidate verification manner. The higher the verification cost, the lower the corresponding first score, that is, the first score may be negatively correlated with the verification cost of the corresponding candidate verification manner. Optionally, the preceding first preset score may be preset based on the verification cost. For example, the first preset score may be negatively correlated with the verification cost of the corresponding candidate verification manner. For example, for the image selection verification manner, the first preset score corresponding to a historical pass rate of 95% is higher than the first preset score corresponding to a historical pass rate of 10%. The higher the first preset score, the lower the corresponding verification cost.

Step 204: Determining a candidate verification manner set from the candidate verification manner set based on the first score corresponding to the candidate verification manner.

For example, the candidate verification manners are sorted based on the first scores corresponding to the candidate verification manners in the candidate verification manner set, a preset number of candidate verification manners with higher first scores are selected as candidate verification manners, and the candidate verification manner set is obtained. For another example, a candidate verification manner whose first score is greater than or equal to a first score threshold is used as a candidate verification manner to obtain the candidate verification manner set. In this way, if the first scores corresponding to the candidate verification manners are all greater than or equal to the first score threshold, the candidate verification manner set may be the same as the candidate verification manner set. By using the preceding manner, a candidate verification manner with a lower first score may be filtered out in advance, for example, a candidate verification manner that is too difficult for a current user to pass verification is filtered out. For example, for a certain user, the historical pass rate of the Chinese idiom fill-in-the-blank verification manner is 1%, indicating that the user may know very few Chinese idioms and it is difficult for the user to pass the verification. Therefore, another verification manner with a higher historical pass rate may be selected as a candidate verification manner.

Step 205: Determining a second score corresponding to a candidate verification manner in the candidate verification manner set based on the feature of the service corresponding to the target service.

Exemplarily, for each candidate verification manner in the candidate verification manner set, the second score corresponding to the current candidate verification manner is determined based on the feature of the service corresponding to the target service. A specific scoring manner is not limited. For example, second preset scores corresponding to each verification manner may be preset for different feature values of feature indicators included in the feature of the service. For the current candidate verification manner, the second score corresponding to the current candidate verification manner is determined based on a sum, a weighted sum, or a product of the second preset scores corresponding to the feature values of the feature indicators included in the feature of the service. For another example, for each combination of different feature values of the feature indicators included in the feature of the service, a second correspondence between the combination and second scores corresponding to each verification manner is established in advance. For the current candidate verification manner, a corresponding second target combination is determined based on the feature of the service corresponding to the target service, and the second score corresponding to the second target combination is determined by querying the second correspondence to obtain the second score corresponding to the current candidate verification manner.

Optionally, the second score is related to a matching degree between the corresponding candidate verification manner and the feature of the service. The feature of the service is determined based on preference information of the service corresponding to the target service for a verification manner. The preference information includes preference degrees of the service for a verification cost and/or verification accuracy of the verification manner. The verification cost is used to characterize the difficulty of the client passing verification performed by using the corresponding candidate verification manner. The verification accuracy is used to characterize the accuracy of a verification result obtained after the client is verified by using the corresponding candidate verification manner. Therefore, the selected target verification manner can be more in line with the actual needs of the service, thereby further improving the accuracy of the target verification manner.

Optionally, the preference information may be determined according to the configuration of the target service or may be predicted according to the industry to which the target service belongs and a provision cost of the target service.

Step 206: Determining a target verification manner from the candidate verification manner set based on the second score corresponding to the candidate verification manner.

Exemplarily, a candidate verification manner with the highest second score may be selected from the candidate verification manner set as the target verification manner.

Optionally, the candidate verification manners in the candidate verification manner set may be sorted based on the second scores, for example, sorted in descending order, and a candidate verification manner ranked first is determined as the current target verification manner. It is determined whether the client supports the current target verification manner. If not, a candidate verification manner ranked second is successively determined as the current target verification manner, and whether the client supports the current target verification manner continues to be determined, and so on, until a target verification manner that is supported by the client is determined.

Optionally, a preset verification manner that is not supported by the client may also be filtered out before or after the candidate verification manner set corresponding to the target service request is determined.

Optionally, whether the client has transmitted preset feedback for the current target verification manner is determined, and if yes, a candidate verification manner ranked second is successively determined as the current target verification manner, and whether the client has sent preset feedback for the current target verification manner continues to be determined, and so on, until a target verification manner for which the client has not sent preset feedback is determined. The preset feedback may be, for example, preset information fed back by a user through the client, and the preset information is used to indicate that the user's acceptance of performing verification by using the target verification manner is lower than a preset acceptance threshold. For example, taking a telephone verification manner as an example, if a user receives multiple telephone calls for verification within a short period of time, the user may feel excessively disturbed, and the user may reduce the number of received verification telephone calls by transmitting the preset feedback.

Optionally, whether the client has sent preset feedback for the current target verification manner is determined, and if yes, a target candidate verification manner in the candidate verification manner set (the first score of the target candidate verification manner is lower than the first score of the current target verification manner. For example, the target candidate verification manner is a candidate verification manner with the lowest first score among candidate verification manners for which the preset feedback has been determined) is determined as the current target verification manner. In this way, the candidate verification manner with the greatest difficulty is used as a new target verification manner, thereby avoiding the use of a verification manner with a low difficulty for verification due to low acceptance of machine feedback and improving the verification accuracy.

Step 207: Verifying the client based on the target verification manner and determine a response manner corresponding to the target service request based on a verification result.

The service request processing method provided in the embodiments of the present disclosure includes: after the candidate verification manner set corresponding to the target service request is determined, first determining the first score corresponding to each candidate verification manner based on the first client feature, then determining the candidate verification manner set based on the first score, determining the second score corresponding to the candidate verification manner based on the feature of the service corresponding to the target service, and then determining the target verification manner from the candidate verification manner set based on the second score, thereby improving the flexibility, efficiency, and accuracy of determining the target verification manner.

In some embodiments, before the determining the candidate verification manner set corresponding to the target service request, the method further includes: determining a client type of the client based on a second client feature of the client, where the client type includes a valid type, an invalid type, and a to-be-verified type; and the determining the candidate verification manner set corresponding to the target service request includes: determining the candidate verification manner set corresponding to the target service request when it is determined that the client type of the client is the to-be-verified type. Therefore, before the candidate verification manner set corresponding to the target service request is determined, the client type of the client is first determined based on the second client feature of the client, and when the client type is the to-be-verified type, the target verification manner is flexibly determined, thereby further improving the verification efficiency.

Exemplarily, the second client feature may be the same as or different from the first client feature, which is not specifically limited. For example, the second client feature may include a second device feature, a second network feature, a second account feature, and the like. Optionally, a client type of the client may be determined based on a second client feature of the client based on a Rulebase or a machine learning model.

Exemplarily, the probability that a device used for the invalid type is a malicious device or a cheating device is relatively high. For the invalid type, verification may not be required, and the target service request may be directly refused. Alternatively, although the target service request is responded to, the current target service request is recorded, so that relevant measures can be taken for processing. The device used for the valid type may be considered as a trusted device, and the target service request may be directly accepted without verification.

Exemplarily, the client type of the client may be determined based on the following type determination methods.

In a first method, whether a device identification number in the second client feature is in a first preset identification number set may be determined, and if yes, the client type is the valid type; whether the device identification number in the second client feature is in a second preset identification number set is determined, and if yes, the client type is the invalid type; and if the device identification number in the second client feature is not in the first preset identification number set or the second preset identification number set, the client type is the to-be-verified type.

In a second method, a first request rate of a service of the same type as the target service provided by a different service in the second client feature is determined, and if the first request rate is higher than a preset first request rate threshold, the client type is determined to be the invalid type. For example, the number of times that the service of the same type as the target service is shown to the client is N, and the service request sent by the client is received M times, and the first request rate is M/N. When the first request rate is 90% or more or even 100%, the service request is likely to be a malicious service request automatically sent by a robot, and therefore, the corresponding client may be determined to be the invalid type.

In a third method, an IP address corresponding to the client is acquired, and a second request rate of a service of the same type as the target service provided by a different service in a base station or cell corresponding to the IP address is determined, and if the second request rate is higher than a preset second request rate threshold, the client type is determined to be the invalid type. For example, the number of times that the service request for the service of the same type as the target service is received is A, and the service request sent by the client is received B times through the base station or cell corresponding to the IP address, and the second request rate is B/A. When the second request rate is higher than the preset second request rate threshold, the service request is likely to be a malicious service request automatically sent by a robot in the base station or cell corresponding to the IP address, and therefore, the corresponding client may be determined to be the invalid type.

In a fourth method, the client type may be determined in combination with service result statistical data of the target service. For example, after counting, if it is found that a third request rate of an invalid service request received by the target service is higher than a preset third request rate threshold, the client type is determined to be the invalid type. For example, the number of times that the service request received by the target service is C, and D times of them are subsequently confirmed to be invalid service requests sent by malicious users, and the third request rate is D/C. When the third request rate is higher than the preset third request rate threshold, the current client may also be the invalid type.

Optionally, the client type may be determined based on any one or more of the preceding methods.

The embodiments of the present disclosure are further described below with a specific application scenario as an example. At present, in industries such as home decoration, life services, and automobiles, in order to expand the number of users, online service information can be delivered through an Internet platform, so that a user can view an online delivery object (such as an advertisement) of a service in a process of browsing network information through various terminals. In addition, in order to facilitate the establishment of a connection between the user and the service, improve the service efficiency and service quality, etc., the online delivery object may include a related control for the user to enter information, for example, the user may enter his/her own contact information or a related situation or requirement of the service that he/she wants to obtain. For example, in a clue advertisement scenario, the user may enter information based on an advertisement page, and the service may be recorded as an information entry service based on the online delivery object. The target service may include the information entry service based on the online delivery object. After the service releases the online delivery object on the Internet platform, if the user successfully enters information based on the online delivery object, the service usually needs to pay a corresponding delivery cost, for example, paying a corresponding fee to the Internet platform. A malicious user may use a robot to simulate a real user to enter information, thereby indirectly obtaining relevant drainage benefits or causing malicious competition between different services. Therefore, for the preceding application scenario, an effective verification manner needs to be adopted to identify a malicious request.

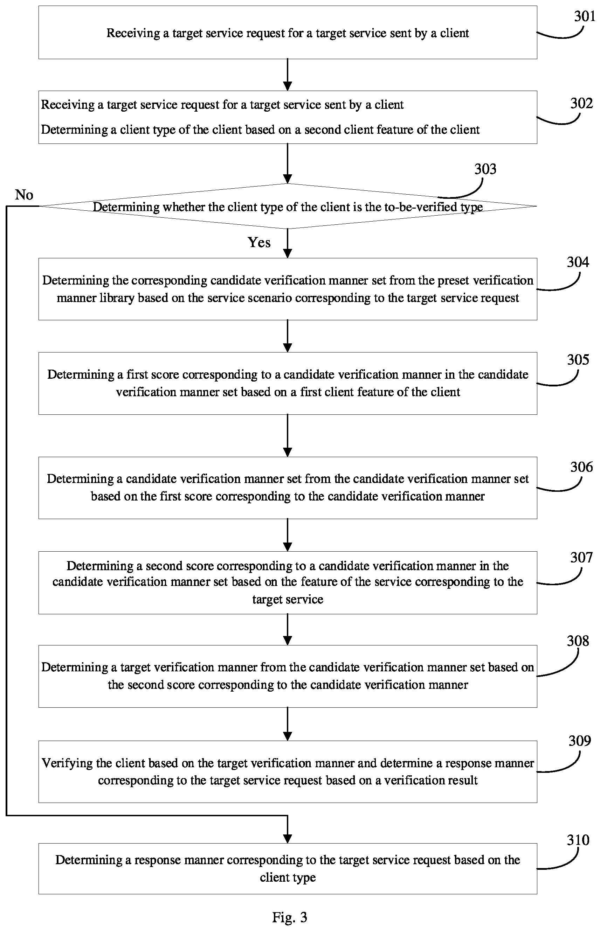

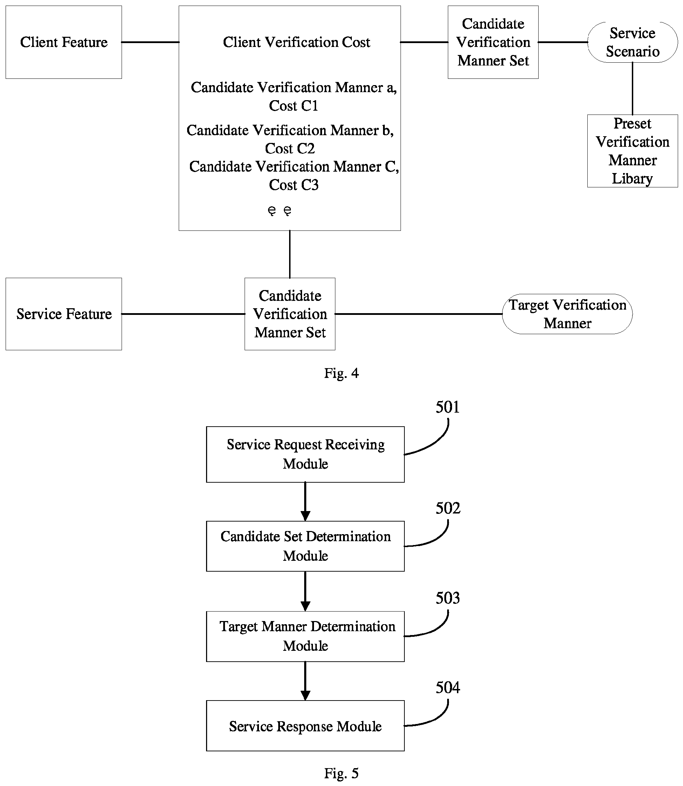

Fig. 3 is a flowchart of still another service request processing method according to an embodiment of the present disclosure. The embodiment of the present disclosure optimizes the preceding embodiment based on various optional solutions in the preceding embodiment. Fig. 4 is a flowchart of a process of determining a target verification manner according to an embodiment of the present disclosure. The technical solutions in the embodiments of the present disclosure may be understood in conjunction with Fig. 4. Specifically, the method includes the steps below.

Step 301: Receiving a target service request for a target service sent by a client.

Exemplarily, an online delivery object, such as a lead advertisement, placed by a target service may be shown on a preset page of a client. In a process of viewing the preset page, if a user is interested in the lead advertisement and has a willingness to enter information, the user may trigger an operation of acquiring an information entry service (target service) based on the online delivery object. After detecting the trigger operation, the client transmits a target service request for the information entry service to a server.

Step 302: Determining a client type of the client based on a second client feature of the client.

The client type includes a valid type, an invalid type, and a to-be-verified type.

Optionally, when the client type is the to-be-verified type, a target probability that the client is the invalid type may be determined.

Step 303: Determining whether the client type of the client is the to-be-verified type. If yes, step 304 is performed; if not, step 310 is performed.

Step 304: Determining the corresponding candidate verification manner set from the preset verification manner library based on the service scenario corresponding to the target service request.

Exemplarily, the service scenario may be determined based on a page type of a preset page of the client, and the page type may be divided based on at least one of page content, page style, and page function. For example, the page type may be divided into a media stream display page (the online delivery object is used as a piece of media content in a media stream), a search page (the online delivery object is used as a search result), a service aggregation page (the online delivery object is used as display information of an aggregated service), and the like according to the page function. Different candidate verification manner sets may be determined for different service scenarios.

As shown in Fig. 4, the candidate verification manner set is selected from the preset verification manner library according to the service scenario.

Optionally, the corresponding candidate verification manner set is determined from the preset verification manner library based on the service scenario corresponding to the target service request and the target probability. Therefore, the candidate verification manner set may be more accurately determined in combination with the preceding client type determination result.

Step 305: Determining a first score corresponding to a candidate verification manner in the candidate verification manner set based on a first client feature of the client.

The first score is related to a verification cost of the corresponding candidate verification manner, and the verification cost is used to characterize the difficulty of the client passing verification performed by using the corresponding candidate verification manner.

As shown in Fig. 4, a verification cost corresponding to each candidate verification manner in the candidate verification manner set is determined based on the first client feature of the client, and the verification cost is used as the first score.

Step 306: Determining a candidate verification manner set from the candidate verification manner set based on the first score corresponding to the candidate verification manner.

As shown in Fig. 4, the candidate verification manner set is selected from the candidate verification manner set based on the verification cost.

Step 307: Determining a second score corresponding to a candidate verification manner in the candidate verification manner set based on the feature of the service corresponding to the target service.

The second score is related to a matching degree between the corresponding candidate verification manner and the feature of the service. The feature of the service is determined based on preference information of the service corresponding to the target service for a verification manner. The preference information includes preference degrees of the service for a verification cost and/or verification accuracy of the verification manner. The verification cost is used to characterize a difficulty of the client passing verification performed by using the corresponding candidate verification manner. The verification accuracy is used to characterize an accuracy of a verification result obtained after the client is verified by using the corresponding candidate verification manner.

Step 308: Determining a target verification manner from the candidate verification manner set based on the second score corresponding to the candidate verification manner.

Exemplarily, a candidate verification manner with the highest second score is selected as the target verification manner.

As shown in Fig. 4, the second score corresponding to each candidate verification manner is determined in combination with the feature of the service (such as the preference information of a merchant that releases a clue advertisement on the Internet platform for the verification cost and the verification accuracy), and then the final target verification manner is determined.

Step 309: Verifying the client based on the target verification manner and determine a response manner corresponding to the target service request based on a verification result.

Step 310: Determining a response manner corresponding to the target service request based on the client type.

Exemplarily, if the client type is the invalid type, a response may be refused, or a normal response may be made, but the current target service request is recorded to notify the target service that the entry information corresponding to the current target service request is invalid, and a corresponding fee is prohibited to be charged from the target service for the current target service request.

The service request processing method provided in the embodiments of the present disclosure includes: after a target service request for a target service sent by a client is received, first determining a client type of the client, and when the client type is an invalid type or a valid type, directly using a preset response manner to respond without verification, to improve the response efficiency; if the client type is a to-be-verified type, preliminarily screening a candidate verification manner set from a preset verification manner library according to a service scenario, to improve the efficiency of subsequently determining a target verification manner; then gradually determining a final target verification manner based on a first client feature of the client and a feature of a service corresponding to the target service; verifying the client based on the target verification manner; and determining a response manner corresponding to the target service request based on a verification result. In this manner, the response efficiency and accuracy of the target service request can be effectively balanced, malicious service requests can be accurately identified and reasonably processed, and the benefit and usage experience of a service and ordinary users can be ensured. For a lead advertisement scenario, a business environment with a virtuous cycle can be ensured in this scenario.

Fig. 5 is a diagram illustrating the structure of a service request processing apparatus according to an embodiment of the present disclosure. As shown in Fig. 5, the apparatus includes a service request receiving module 501, a candidate set determination module 502, a target manner determination module 503, and a service response module 504.

The service request receiving module 501 is configured to receive a target service request for a target service sent by a client.

The candidate set determination module 502 is configured to determine a candidate verification manner set corresponding to the target service request.

The target manner determination module 503 is configured to determine a target verification manner from the candidate verification manner set based on a first client feature of the client and/or a feature of a service corresponding to the target service.

The service response module 504 is configured to verify the client based on the target verification manner and determine a response manner corresponding to the target service request based on a verification result.

According to the service request processing apparatus provided in the embodiments of the present disclosure, when a client that transmits a service request needs to be verified, a verification manner that needs to be currently used may be dynamically determined based on a client feature and/or a feature of a service corresponding to the service request, thereby improving the flexibility, accuracy, and verification efficiency of client verification.

Optionally, the target manner determination module includes:
a first score determination unit configured to determine a first score corresponding to a candidate verification manner in the candidate verification manner set based on the first client feature of the client;
a candidate verification manner set determination unit configured to determine a candidate verification manner set from the candidate verification manner set based on the first score corresponding to the candidate verification manner;
a second score determination unit configured to determine a second score corresponding to a candidate verification manner in the candidate verification manner set based on the feature of the service corresponding to the target service; and
a target verification manner determination unit configured to determine the target verification manner from the candidate verification manner set based on the second score corresponding to the candidate verification manner.

Optionally, the first score is related to a verification cost of the corresponding candidate verification manner, and the verification cost is used to characterize the difficulty of the client passing verification performed by using the corresponding candidate verification manner.

Optionally, the second score is related to a matching degree between the corresponding candidate verification manner and the feature of the service. The feature of the service is determined based on preference information of the service corresponding to the target service for a verification manner. The preference information includes preference degrees of the service for a verification cost and/or verification accuracy of the verification manner. The verification cost is used to characterize the difficulty of the client passing verification performed by using the corresponding candidate verification manner. The verification accuracy is used to characterize the accuracy of a verification result obtained after the client is verified by using the corresponding candidate verification manner.

Optionally, the candidate set determination module is specifically configured to: determine the corresponding candidate verification manner set from a preset verification manner library based on the service scenario corresponding to the target service request.

Optionally, the apparatus further includes:
a client type determination module configured to determine a client type of the client based on a second client feature of the client before the determining the candidate verification manner set corresponding to the target service request, where the client type includes a valid type, an invalid type, and a to-be-verified type; and
the candidate set determination module is specifically configured to: determine the candidate verification manner set corresponding to the target service request when it is determined that the client type of the client is the to-be-verified type.

Optionally, the target service is an information entry service based on an online delivery object.

The service request processing apparatus provided in the embodiments of the present disclosure may perform the service request processing method provided in any embodiment of the present disclosure and has function modules and beneficial effects corresponding to the method performed.

It should be noted that the units and modules included in the preceding apparatus are only divided according to functional logic, but are not limited to the preceding division, as long as the corresponding functions can be implemented. In addition, the specific names of the function units are only for the convenience of distinguishing from each other and are not intended to limit the protection scope of the embodiments of the present disclosure.

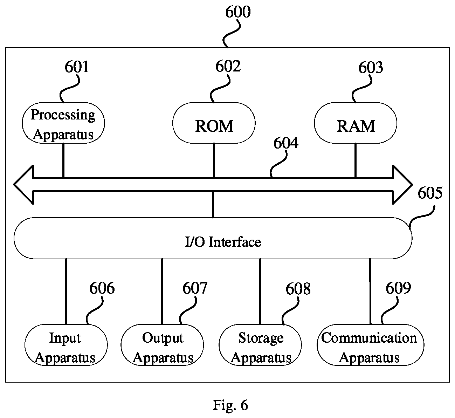

Fig. 6 is a diagram illustrating the structure of an electronic device according to an embodiment of the present disclosure. Reference is made to Fig. 6 below, which illustrates a diagram illustrating the structure of an electronic device 600 (such as a terminal device or a server in Fig. 6) suitable for implementing the embodiments of the present disclosure. The terminal device in the embodiments of the present disclosure may include, but is not limited to, mobile terminals such as a mobile phone, a notebook computer, a digital broadcast receiver, a personal digital assistant (PDA), a tablet computer, a portable multimedia player (PMP), and a vehicle-mounted terminal (such as a vehicle navigation terminal), and fixed terminals such as a digital TV and a desktop computer. The electronic device shown in Fig. 6 is merely an example and should not impose any limitation on the functions and scope of use of the embodiments of the present disclosure.

As shown in Fig. 6, the electronic device 600 may include a processing apparatus (such as a central processing unit and a graphics processing unit) 601, which may perform various appropriate actions and processing according to a program stored in a read-only memory (ROM) 602 or a program loaded from a storage apparatus 608 into a random-access memory (RAM) 603. Various programs and data required for the operation of the electronic device 600 are also stored in the RAM 603. The processing apparatus 601, the ROM 602, and the RAM 603 are connected to each other through a bus 604. An edit/output (I/O) interface 605 is also connected to the bus 604.

Generally, the following apparatuses may be connected to the I/O interface 605: an input apparatus 606 including, for example, a touchscreen, a touchpad, a keyboard, a mouse, a camera, a microphone, an accelerometer, and a gyroscope; an output apparatus 607 including, for example, a liquid crystal display (LCD), a speaker, and a vibrator; the storage apparatus 608 including, for example, a magnetic tape and a hard disk; and a communication apparatus 609. The communication apparatus 609 may allow the electronic device 600 to perform wireless or wired communication with other devices to exchange data. Although Fig. 6 shows the electronic device 600 having various apparatuses, it should be understood that not all of the apparatuses shown here need to be implemented or included. More or fewer apparatuses may be implemented or included alternatively.

In particular, according to an embodiment of the present disclosure, the processes described above with reference to the flowcharts may be implemented as a computer software program. For example, this embodiment of the present disclosure includes a computer program product. The computer program product includes a computer program carried in a non-transitory computer readable medium. The computer program includes program codes for executing the methods shown in the flowcharts. In such an embodiment, the computer program may be downloaded online through the communication apparatus 609 and installed, or may be installed from the storage apparatus 608, or may be installed from the ROM 602. When the computer program is executed by the processing apparatus 601, the preceding functions defined in the methods in the embodiments of the present disclosure are performed.

The names of messages or information exchanged between apparatuses in the implementations of the present disclosure are only for illustrative purposes and are not intended to limit the scope of the messages or information.

The electronic device provided in the embodiment of the present disclosure and the service request processing method provided in the preceding embodiments belong to the same inventive concept. For technical details not described in detail in this embodiment, reference may be made to the preceding embodiments, and this embodiment has the same beneficial effects as the preceding embodiments.

An embodiment of the present disclosure provides a computer storage medium storing a computer program. When the computer program is executed by a processor, the service request processing method provided in the preceding embodiments is implemented.

An embodiment of the present disclosure provides a computer program product. The computer program product includes a computer program. When the computer program is executed by a processor, the service request processing method provided in the preceding embodiments is implemented.

It should be noted that the computer-readable medium described in the present disclosure may be a computer-readable signal medium, a computer-readable storage medium, or any combination thereof. The computer-readable storage medium may be, for example, but not limited to, an electronic, magnetic, optical, electromagnetic, infrared, or semiconductor system, apparatus, or device, or any combination thereof. More specific examples of the computer-readable storage medium may include, but are not limited to, an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof. In the present disclosure, the computer-readable storage medium may be any tangible medium that contains or stores a program. The program may be used by or in combination with an instruction execution system, apparatus, or device. In the present disclosure, the computer-readable signal medium may include a data signal that propagates in a baseband or as a part of a carrier, and computer-readable program codes are carried in the data signal. The data signal propagating in this manner may be in multiple forms and includes, but is not limited to, an electromagnetic signal, an optical signal, or any appropriate combination thereof. The computer-readable signal medium may also be any computer-readable medium other than the computer-readable storage medium. The computer-readable signal medium may transmit, propagate, or transmit a program used by or in combination with an instruction execution system, apparatus, or device. The program codes contained in the computer-readable medium may be transmitted by any appropriate medium, including, but not limited to, a wire, an optical cable, a radio frequency (RF), or any appropriate combination thereof.

In some implementations, the client and the server can communicate using any currently known or future-developed network protocol such as the Hypertext Transfer Protocol (HTTP), and can be interconnected with any form or medium of digital data communication (for example, a communication network). Examples of the communication network include a local area network ("LAN"), a wide area network ("WAN"), the Internet, and an end-to-end network (for example, an ad hoc end-to-end network), as well as any currently known or future-developed network.

The computer-readable medium may be included in the electronic device or may exist alone without being assembled into the electronic device.

The computer-readable medium carries one or more programs, and the one or more programs, when executed by the electronic device, cause the electronic device to: receive a target service request for a target service sent by a client; determine a candidate verification manner set corresponding to the target service request; determine a target verification manner from the candidate verification manner set based on a first client feature of the client and/or a feature of a service corresponding to the target service; and verify the client based on the target verification manner, and determine a response manner corresponding to the target service request based on a verification result.

The computer program codes for performing the operations of the present disclosure may be written in one or more programming languages or a combination thereof. The preceding programming languages include, but are not limited to, object-oriented programming languages such as Java, Smalltalk, and C++, as well as conventional procedural programming languages such as the "C" programming language or similar programming languages. The program codes may be executed entirely on a user computer, partly on a user computer, as a stand-alone software package, partly on a user computer and partly on a remote computer, or entirely on a remote computer or a server. In the case where the remote computer is involved, the remote computer may be connected to the user computer via any type of network, including a local area network (LAN) or a wide area network (WAN), or may be connected to an external computer (for example, via the Internet through an Internet service provider).

The flowcharts and block diagrams in the drawings illustrate the architecture, functions, and operations of possible implementations of systems, methods, and computer program products according to various embodiments of the present disclosure. In this regard, each block in the flowcharts or block diagrams may represent a module, a program segment, or a part of code, which contains one or more executable instructions for implementing a specified logical function. It should also be noted that in some alternative implementations, the functions marked in the blocks may also occur in an order different from that marked in the drawings. For example, two blocks shown one after another may actually be executed substantially in parallel, or sometimes may be executed in a reverse order, which depends on the functions involved. It should also be noted that each block in the block diagrams and/or flowcharts and the combination of blocks in the block diagrams and/or flowcharts may be implemented by a dedicated hardware-based system that performs the specified functions or operations or may be implemented by a combination of dedicated hardware and computer instructions.

The units involved in the embodiments of the present disclosure may be implemented in software or hardware. The name of a module does not constitute a limitation on the module itself under certain circumstances. For example, a service request receiving module may also be described as "a module for receiving a target service request for a target service sent by a client".

The functions described above herein may be performed, at least in part, by one or more hardware logic components. For example, without limitation, exemplary types of hardware logic components that can be used include: a field programmable gate array (FPGA), an application specific integrated circuit (ASIC), an application specific standard product (ASSP), a system on chip (SOC), a complex programmable logic device (CPLD), and so on.

In the context of the present disclosure, a machine-readable medium may be a tangible medium that may include or store a program for use by or in combination with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination thereof. More specific examples of the machine-readable storage medium may include an electrical connection based on one or more wires, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof.

According to one or more embodiments of the present disclosure, a service request processing method is provided, including:
receiving a target service request for a target service sent by a client;
determining a candidate verification manner set corresponding to the target service request;
determining a target verification manner from the candidate verification manner set based on a first client feature of the client and/or a feature of a service corresponding to the target service; and
verifying the client based on the target verification manner and determining a response manner corresponding to the target service request based on a verification result.

According to one or more embodiments of the present disclosure, determining the target verification manner from the candidate verification manner set based on the first client feature of the client and/or the feature of the service corresponding to the target service includes:
determining a first score corresponding to a candidate verification manner in the candidate verification manner set based on the first client feature of the client;
determining a candidate verification manner set based on the first score corresponding to the candidate verification manner;
determining a second score corresponding to a candidate verification manner in the candidate verification manner set based on the feature of the service corresponding to the target service; and
determining the target verification manner from the candidate verification manner set based on the second score corresponding to the candidate verification manner.

According to one or more embodiments of the present disclosure, the first score is related to a verification cost of the corresponding candidate verification manner, and the verification cost is used to characterize the difficulty of the client passing verification performed by using the corresponding candidate verification manner.

According to one or more embodiments of the present disclosure, the second score is related to a matching degree between the corresponding candidate verification manner and the feature of the service. The feature of the service is determined based on preference information of the service corresponding to the target service for a verification manner. The preference information includes preference degrees of the service for a verification cost and/or verification accuracy of the verification manner. The verification cost is used to characterize the difficulty of the client passing verification performed by using the corresponding candidate verification manner. The verification accuracy is used to characterize the accuracy of a verification result obtained after the client is verified by using the corresponding candidate verification manner.

According to one or more embodiments of the present disclosure, determining the candidate verification manner set corresponding to the target service request includes:
determining the corresponding candidate verification manner set from a preset verification manner library based on a service scenario corresponding to the target service request.

According to one or more embodiments of the present disclosure, before determining the candidate verification manner set corresponding to the target service request, the method further includes:
determining a client type of the client based on a second client feature of the client, where the client type includes a valid type, an invalid type, and a to-be-verified type; and
determining the candidate verification manner set corresponding to the target service request includes:
determining the candidate verification manner set corresponding to the target service request when it is determined that the client type of the client is the to-be-verified type.

According to one or more embodiments of the present disclosure, the target service is an information entry service based on an online delivery object.

According to one or more embodiments of the present disclosure, a service request processing apparatus is provided, including:
a service request receiving module configured to receive a target service request for a target service sent by a client;
a candidate set determination module configured to determine a candidate verification manner set corresponding to the target service request;
a target manner determination module configured to determine a target verification manner from the candidate verification manner set based on a first client feature of the client and/or a feature of a service corresponding to the target service; and
a service response module configured to verify the client based on the target verification manner, and determine a response manner corresponding to the target service request based on a verification result.

According to one or more embodiments of the present disclosure, an electronic device is provided, including:
one or more processors; and
a storage apparatus configured to store one or more programs,
wherein the one or more programs, when executed by the one or more processors, cause the one or more processors to perform the service request processing method provided in the embodiments of the present disclosure.

According to one or more embodiments of the present disclosure, a storage medium including computer-executable instructions is provided, wherein the computer-executable instructions, when executed by a computer processor, cause the service request processing method provided in the embodiments of the present disclosure to be performed.

The above description is merely illustrative of the preferred embodiments of the present disclosure and the technical principles used therein. Those skilled in the art should understand that the scope of disclosure involved in the present disclosure is not limited to the technical solutions formed by the specific combinations of the above technical features, and shall also cover other technical solutions formed by any combination of the above technical features or their equivalents without departing from the above disclosed concept, for example, the technical solutions formed by replacing the above features with the technical features having similar functions disclosed in the present disclosure (but not limited to the technical features disclosed in the present disclosure).

In addition, although operations are depicted in a specific order, this should not be understood as requiring that these operations be performed in the specific order shown or in a sequential order. Under certain circumstances, multitasking and parallel processing may be advantageous. Similarly, although several specific implementation details are included in the above discussion, these should not be construed as limiting the scope of the present disclosure. Certain features that are described in the context of separate embodiments may also be implemented in combination in a single embodiment. Conversely, various features that are described in the context of a single embodiment may also be implemented in multiple embodiments separately or in any suitable sub-combination.

Although the subject matter has been described in a language specific to structural features and/or logical actions of the method, it should be understood that the subject matter defined in the appended claims is not necessarily limited to the specific features or actions described above. Rather, the specific features and actions described above are merely exemplary forms for implementing the claims.

## Claims

1. A service request processing method, comprising:
receiving (101) a target service request for a target service sent by a client;
determining (102) a candidate verification manner set corresponding to the target service request;
determining (103) a target verification manner from the candidate verification manner set based on a first client feature of the client and/or a feature of a service corresponding to the target service; and
verifying (104) the client based on the target verification manner and determining a response manner corresponding to the target service request based on a verification result.

2. The method according to claim 1, wherein determining the target verification manner from the candidate verification manner set based on the first client feature of the client and/or the feature of the service corresponding to the target service comprises:
determining a first score corresponding to a candidate verification manner in the candidate verification manner set based on the first client feature of the client;
determining a candidate verification manner set based on the first score corresponding to the candidate verification manner;
determining a second score corresponding to a candidate verification manner in the candidate verification manner set based on the feature of the service corresponding to the target service; and
determining the target verification manner from the candidate verification manner set based on the second score corresponding to the candidate verification manner.

3. The method according to claim 2, wherein the first score is related to a verification cost of the corresponding candidate verification manner, and the verification cost is used to characterize the difficulty of the client passing verification performed by using the corresponding candidate verification manner.

4. The method according to claim 2 or claim 3, wherein the second score is related to a matching degree between the corresponding candidate verification manner and the feature of the service, the feature of the service is determined based on preference information of a service corresponding to the target service for a verification manner, the preference information comprises preference degrees of the service for a verification cost and/or a verification accuracy of the verification manner, the verification cost is used to characterize the difficulty of the client passing verification performed by using the corresponding candidate verification manner, and the verification accuracy is used to characterize the accuracy of a verification result obtained after the client is verified by using the corresponding candidate verification manner.

5. The method according to any one of claims 1 to 4, wherein determining the candidate verification manner set corresponding to the target service request comprises:
determining the corresponding candidate verification manner set from a preset verification manner library based on a service scenario corresponding to the target service request.

6. The method according to any one of claims 1 to 5, wherein before determining the candidate verification manner set corresponding to the target service request, the method further comprises:
determining a client type of the client based on a second client feature of the client, wherein the client type comprises a valid type, an invalid type, and a to-be-verified type; and
wherein determining the candidate verification manner set corresponding to the target service request comprises:
determining the candidate verification manner set corresponding to the target service request when it is determined that the client type of the client is the to-be-verified type.

7. The method according to any one of claims 1 to 6, wherein the target service is an information entry service based on an online delivery object.

8. A service request processing apparatus, comprising:
a service request receiving module configured to receive a target service request for a target service sent by a client;
a candidate set determination module configured to determine a candidate verification manner set corresponding to the target service request;
a target manner determination module configured to determine a target verification manner from the candidate verification manner set based on a first client feature of the client and/or a feature of a service corresponding to the target service; and
a service response module configured to verify the client based on the target verification manner and determine a response manner corresponding to the target service request based on a verification result.

9. An electronic device, comprising:
at least a processor, and
a non-transitory memory with instructions thereon,
wherein the instructions upon execution by the processor, cause the processor to:
receive a target service request for a target service sent by a client;
determine a candidate verification manner set corresponding to the target service request;
determine a target verification manner from the candidate verification manner set based on a first client feature of the client and/or a feature of a service corresponding to the target service; and
verify the client based on the target verification manner and determining a response manner corresponding to the target service request based on a verification result.

10. The electronic device according to claim 9, wherein the processor is further caused to:
determine a first score corresponding to a candidate verification manner in the candidate verification manner set based on the first client feature of the client;
determine a candidate verification manner set based on the first score corresponding to the candidate verification manner;
determine a second score corresponding to a candidate verification manner in the candidate verification manner set based on the feature of the service corresponding to the target service; and
determine the target verification manner from the candidate verification manner set based on the second score corresponding to the candidate verification manner.

11. The electronic device according to claim 10, wherein the first score is related to a verification cost of the corresponding candidate verification manner, and the verification cost is used to characterize the difficulty of the client passing verification performed by using the corresponding candidate verification manner.

12. The electronic device according to claim 10 or claim 11, wherein the second score is related to a matching degree between the corresponding candidate verification manner and the feature of the service, the feature of the service is determined based on preference information of a service corresponding to the target service for a verification manner, the preference information comprises preference degrees of the service for a verification cost and/or a verification accuracy of the verification manner, the verification cost is used to characterize the difficulty of the client passing verification performed by using the corresponding candidate verification manner, and the verification accuracy is used to characterize the accuracy of a verification result obtained after the client is verified by using the corresponding candidate verification manner.

13. The electronic device according to any one of claims 9 to 12, wherein the processor is further caused to:
determine the corresponding candidate verification manner set from a preset verification manner library based on a service scenario corresponding to the target service request.

14. The electronic device according to any one of claims 9 to 13, wherein before determining the candidate verification manner set corresponding to the target service request, the processor is further caused to:
determine a client type of the client based on a second client feature of the client, wherein the client type comprises a valid type, an invalid type, and a to-be-verified type; and
wherein determining the candidate verification manner set corresponding to the target service request, the processor is further caused to:
determine the candidate verification manner set corresponding to the target service request when it is determined that the client type of the client is the to-be-verified type.

15. A non-transitory computer-readable storage medium storing instructions that cause at least a processor to:
receive a target service request for a target service sent by a client;
determine a candidate verification manner set corresponding to the target service request;
determine a target verification manner from the candidate verification manner set based on a first client feature of the client and/or a feature of a service corresponding to the target service; and
verify the client based on the target verification manner and determining a response manner corresponding to the target service request based on a verification result.
